Europäisches Patentamt

European Patent Office

Office européen des brevets

(11) Numéro de publication: **0 014 830**
**A1**

## (12) DEMANDE DE BREVET EUROPEEN

(21) Numéro de dépôt: **80100122.3**

(22) Date de dépôt: **11.01.80**

(51) Int. Cl.³: **B 63 B 35/72**
**B 63 B 35/54, B 63 B 1/12**

(30) Priorité: **29.01.79 LU 80848**

(43) Date de publication de la demande:
**03.09.80 Bulletin 80/18**

(84) Etats Contractants Désignés:
**AT BE CH DE FR GB IT NL SE**

(71) Demandeur: **TRADETEX S.A. HOLDING**
**13 bd. de la Foire**
**L-Luxembourg(LU)**

(72) Inventeur: **Muller, Gérard**

**F-57220 Boulay(FR)**

(74) Mandataire: **Meyers, Ernest et al,**
**c/o FREYLINGER & ASSOCIES Postfach 1153, 46 rue du**
**Cimetière**
**Luxemburg(LU)**

(54) **Module flottant porte-caravane à motopropulsion.**

(57) Un module flottant à motopropulsion est conçu pour pouvoir embarquer une caravane et permettre à son utilisateur de pouvoir profiter à la fois d'un abri roulant et des agréments de la navigation de plaisance. Le module comporte des flotteurs (10, 12) reliés entre eux par des entretoises et pourvus d'une paire de rails pour recevoir les roues de la caravane (24) ainsi qu'une superstructure montée sur les flotteurs (10, 12) et comprenant un pont de séjour (36) s'étendant autour de la caravane (24), un groupe moteur (42) et un poste de pilotage (52).

./...

Fig. 1

L'invention concerne un module flottant porte-caravane à motopropulsion.

L'idée de base de l'invention consiste à fournir au propriétaire ou utilisateur d'une caravane, ou roulotte de camping, la possibilité de déplacer celle-ci non seulement sur le réseau routier, mais aussi sur l'eau. Cette possibilité offre un attrait d'autant plus grand que le tourisme routier et le camping perdent de leurs agréments dans la même mesure qu'augmente l'encombrement des routes et des terrains de camping.

L'état de la technique ne connaît pas de matériel ou d'engin spécifiquement conçu pour réaliser cette idée. Pour pouvoir jouir et des avantages d'un abri roulant tel que la caravane et des agréments qu'offre la navigation de plaisance touristique, il fallait au contraire jusqu'ici disposer, outre de la caravane, d'une unité flottante à confort comparable, tel qu'un yacht ou autre bateau à cabines. Or, le prix de ceux-ci les rend inabordables pour la plupart des utilisateurs de caravanes.

Le but de la présente invention est de combler cette lacune de l'état de la technique en proposant d'embarquer la caravane sur un module flottant spécialement conçu à cette fin, afin de pouvoir jouir de la caravane, au gré, également comme habitation flottante et cela à un coût relativement modeste.

Ce but de la présente invention est réalisé par un module flottant porte-caravane à motopropulsion, caractérisé par une structure flottante essentiellement constituée d'au moins deux flotteurs entretoisés entre eux et une paire de rails, fixés sur les entretoises des flotteurs et servant à recevoir les roues de la caravane, par une superstructure montée sur la structure flottante et servant de pont de séjour et de pilotage, par un groupe motopropulseur, et par des moyens de pilotage et de manoeuvre.

Dans un autre mode de réalisation, les flotteurs sont remplacés par une barge à fond plat constituée par des caissons étanches.

Pour mettre en évidence d'autres particularités et caractéristiques de la présente invention, on décrira ci-après, à titre d'exemple, un mode de réalisation préféré avec référence aux figures annexées, dans lesquelles :

la figure 1 représente une vue schématique de bâbord du module porte-caravane avec une caravane embarquée sur celui-ci ;

la figure 2 représente une vue schématique de tribord du sujet de la figure 1 ;

la figure 3 représente une vue schématique en élévation de l'avant du sujet de la figure 1 ;

la figure 4 représente une vue schématique en élévation de l'arrière du sujet de la figure 1 ;

la figure 5 représente une vue schématique en plan du sujet de la figure 1.

Dans ces figures, on a désigné les mêmes éléments par les mêmes repères de référence.

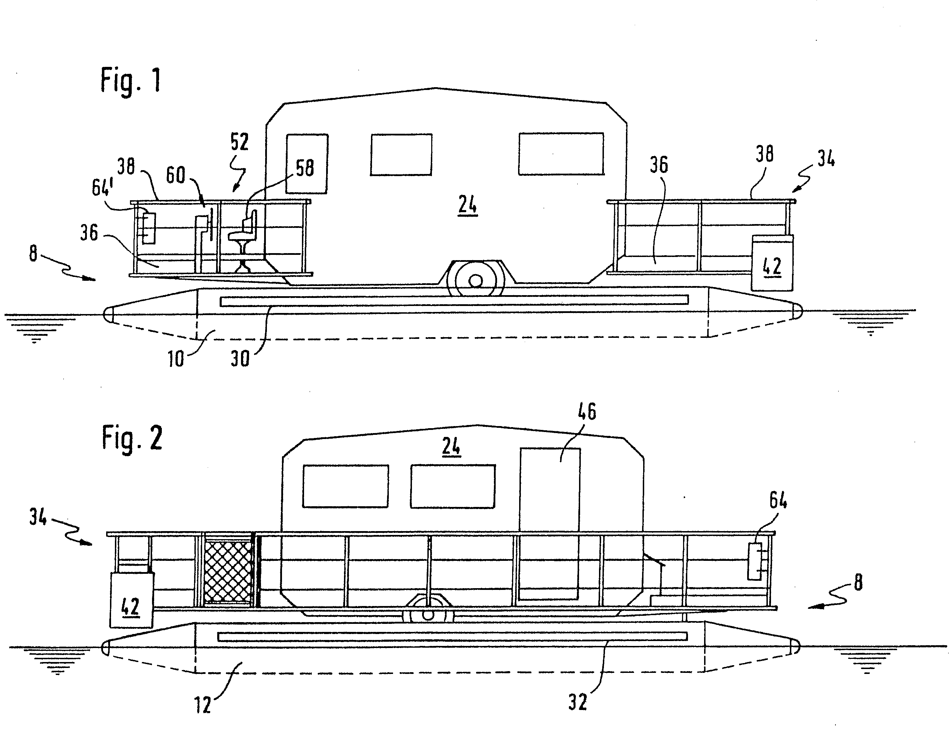

Pour suivre la description de l'engin selon la présente invention, on se référera avantageusement à toutes les figures 1 à 5 simultanément.

La structure flottante du module porte-caravane 8 est essentiellement composée de deux flotteurs 10, 12 ou davantage, reliés entre eux par des entretoises 14, sur lesquelles sont fixés, dans le sens longitudinal, deux rails de roulement 16 et 18 dans lesquels sont guidées les roues 20, 22, d'une caravane 24 embarquée. Des béquilles de stabilisation ( non représentées ) de la caravane peuvent également venir se poser sur ces rails 16 et 18. Un de ces deux rails, en l'occurence celui de bâbord 16, donc de gauche vu de l'arrière du module vers l'avant, est fixe, tandis que celui de tribord, donc de droite, 18, peut être mobile dans le sens transversal afin de pouvoir être adapté à la voie de la caravane 24.

Les flotteurs 10, 12, peuvent être en métal ou bien en matière synthétique armée par exemple. On peut évidemment prévoir plus de deux flotteurs, par exemple quatre. La capacité des flotteurs est bien entendu en rapport avec la charge à supporter, avec un coefficient de sécurité suffisant pour assurer également la flottaison en cas de surcharge accidentelle.

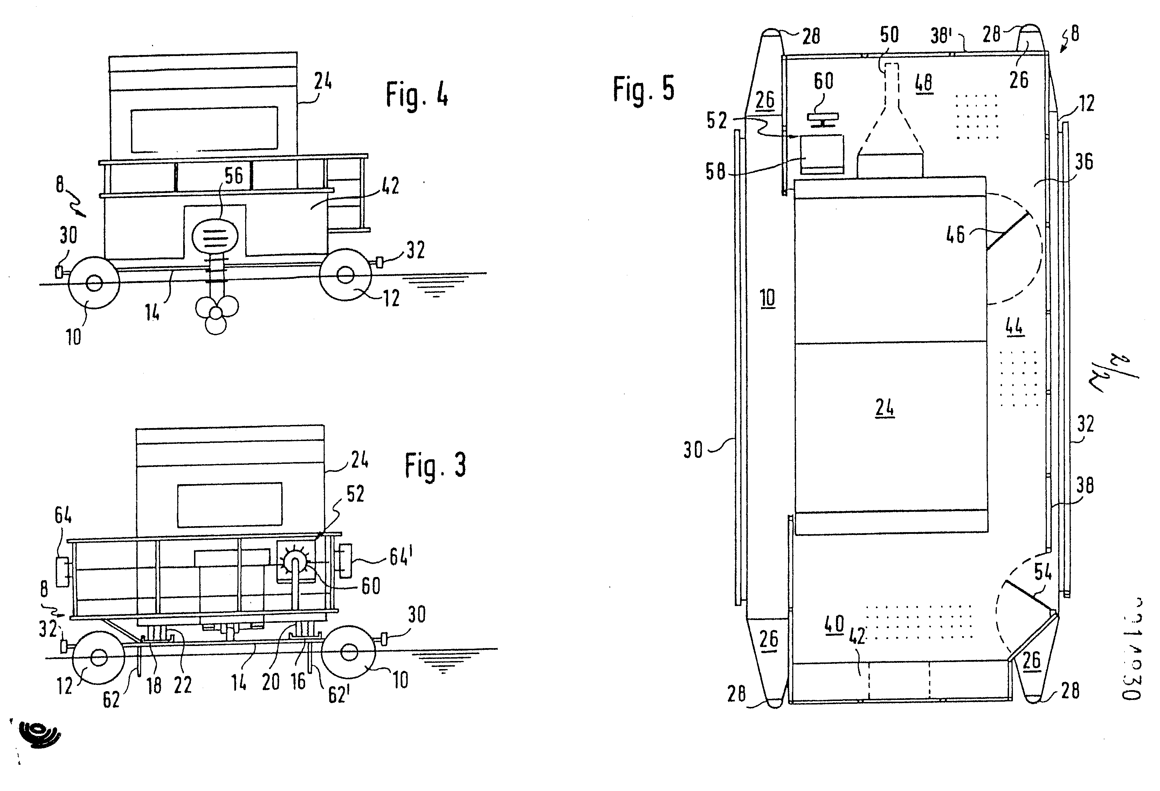

Les flotteurs sont avantageusement composés d'éléments de longueur variable ( non montrés ), par exemple deux, de 1 et 0,5 m de longueur, interchangeables, de manière qu'ils puissent être allongés ou raccourcis selon la taille de la caravane et la masse à supporter. Les extrémités avant et arrière tronconiques 26 des flotteurs ( voir figure 5 ) se terminent en une configuration arrondie 28 permettant une meilleure pénétration dans l'eau à l'avant et un meilleur écoulement de l'eau à l'arrière.

Lesdits éléments ( non montrés ) des flotteurs sont de préférence divisés en compartiments étanches pour assurer la sécurité de l'ensemble en cas de voie d'eau accidentelle dans l'un d'eux. Les faces extérieures des flotteurs sont protégées par des boudins de défense 30, 32, contre les chocs.

Les entretoises de connexion des flotteurs sont conçues de façon démontable ( non montré ) pour que l'ensemble ne soit pas hors code lors de son transport par route.

Le chargement et le déchargement de la caravane à partir d'un plan incliné peut se faire par deux rails amovibles ( non montrés ) pouvant être fixés à l'avant de cette structure flottante du module 8.

Une superstructure 34 ( figure 1 ) essentiellement constituée par un pont 36 muni d'un garde-corps 38 est montée, par des moyens conventionnels non montrés, sur la structure flottante du module. Ce pont 36, 38, permet aux occupants de la caravane de séjourner dehors et de circuler entre l'avant et l'arrière du module.

Le pont 36 forme à l'arrière une plage assez spacieuse 40 ( figure 5 ) permettant d'y installer une table amovible avec des chaises, ou des fauteuils par exemple ( non montré ).

A l'arrière de cette plage 40 est fixé un caisson 42 abritant, entre autres, le moteur de propulsion qui sera décrit plus loin en détail.

A la partie droite ( figure 5 ) du module, le pont 36 forme une passerelle 44 permettant la circulation vers l'avant et l'arrière du pont à partir de la porte d'entrée 46 de la caravane. Cette passerelle 44 est avantageusement solidaire du rail de droite ( mobile ) 18 ( sur la figure 3, ce rail se trouve à gauche, la figure 3 étant une vue de l'avant du module ) , pour être aussi transversalement déplaçable en fonction de la largeur individuelle des caravanes.

La partie avant 48 ( figure 5 ) du pont 36 passe avantageusement au-dessus du timon 50 de la caravane et est amovible ( non montré ) au moins sur toute la largeur de cette dernière afin de permettre le chargement et le déchargement de la caravane.

Le poste de pilotage 52 du module est avantageusement disposé sur la partie gauche ( figures 3 et 5 ) de la partie avant 48 du pont 36 si la passerelle 44 est à droite.

Un portillon d'accès à bord 54 est prévu à un endroit convenable du pont 36, respectivement du garde-corps 38, par exemple à la partie arrière droite. L'accès à bord se fait par une passerelle amovible non montrée.

Toutes les surfaces de circulation sont rendues antidérapantes par des moyens connus en soi, par exemple des matériaux connus se prêtant à cette fin ( non montré ).

La passerelle de circulation 44 et le garde-corps latéral 38 sont de longueur variable ( non montré ) pour pouvoir être adaptés à la longueur de la caravane. La partie avant 38' ( figure 5 ) du garde-corps est amovible pour les mêmes raisons que la partie avant 48 du pont 36, c'est-à-dire pour permettre le chargement et le déchargement de la caravane.

Le porte-caravane est propulsé de manière conventionelle par un moteur nautique 56 approprié, soit un moteur hors-bord, soit un moteur "indoor" avec transmission en "Z" .

Ce moteur 56 est avantageusement abrité dans le caisson 42 fixé à l'arrière du pont 36. Ce caisson 42 peut également recevoir le réservoir de carburant, les batteries, une dynamo pour alimenter les feux de circulation, respectivement de navigation, du module et de la caravane, et éventuellement pour alimenter l'intérieur de la caravane avec du courant domestique. Dans ce caisson 42 peuvent encore être réservés des volumes de rangement. Son dessus est avantageusement muni d'un couvercle rabattable qui peut également servir comme siège ou couchette.

Le poste de pilotage 52 prévu à l'avant du module et dont on n'a représenté que le siège 58 et la roue du gouvernail avec son support 60, est équipé de toutes les commandes et instruments nécessaires à la navigation et au moteur, sans qu'il soit pour autant nécessaire de les énumérer en détail, étant donné qu'il s'agit d'éléments parfaitement connus en navigation.

Il est avantageux de prévoir à l'avant un ou deux petits gouvernails 62, 62', commandés depuis le poste de pilotage et facilitant les manoeuvres. Une bonne visibilité vers l'arrière est assurée par deux rétroviseurs 64, 64' ( figures 1 à 3 ) disposés de part et d'autre du garde-corps 38, respectivement 38' .

Il va de soi que le module porte-caravane est équipé de feux de signalisation et autres équipements réglementaires.

Pour faciliter la manoeuvre et le stationnement et pour augmenter la sécurité globale, l'équipement du module porte-caravane peut être complété par des accessoires, tels que gaffes, cortages, grappins, chomards, treuils, gilets de sauvetage, bouées, extincteurs, phares, corne de brume, etc.

De nombreuses variantes peuvent être imaginées dans l'exécution du module porte-caravane. On peut citer, comme exemple, le remplacement des flotteurs par une barge à fond plat constituée par des caissons en métal ou en matière synthétique moulée avec compartiments étanches.

L'invention a été décrite en référence à une exécution ayant par exemple une passerelle passant à droite de la caravane. Il est évident que toute la disposition décrite peut être inversée, de sorte que cette passerelle se trouve à gauche, le poste de pilotage à droite etc.

# REVENDICATIONS
======================================

1.   Module flottant porte-caravane à motopropulsion, caractérisé par une structure flottante essentiellement constituée d'au moins deux flotteurs ( 10, 12 ) entretoisés entre eux et une paire de rails ( 16, 18 ), fixés sur les entretoises ( 14 ) des flotteurs ( 10, 12 ) et servant à recevoir les roues ( 20, 22 ) de la caravane ( 24 ) , par une superstructure montée sur la structure flottante et servant de pont de séjour ( 36 ) et de pilotage, par un groupe motopropulseur, et par des moyens de pilotage et de manoeuvre ( 52 ).

2.   Module selon la revendication 1, caractérisé en ce que les flotteurs ( 10, 12 ) sont en matière synthétique armée.

3.   Module selon la revendication 1, caractérisé en ce que les flotteurs ( 10, 12 ) sont en métal.

4.   Module selon l'une quelconque des revendications 1 à 3, caractérisé en ce que les flotteurs ( 10, 12 ) sont composés de plusieurs éléments flottants de longueur variable et interchangeables entre eux.

5.   Module selon les revendications 1 à 4, caractérisé en ce que les flotteurs ou leurs éléments sont divisés en compartiments étanches.

6.   Module selon la revendication 1, caractérisé en ce que les flotteurs ( 10, 12 ) sont protégés latéralement par des boudins ( 30, 32 ) de défense contre les chocs.

7.   Module selon l'une quelconque des revendications 1 à 6, caractérisé en ce que les entretoises ( 14 ) sont démontables.

8.   Module selon l'une quelconque des revendications 1 à 7, caractérisé par deux rails amovibles pour le chargement et le déchargement de la caravane.

9.   Module selon l'une quelconque des revendications 1 à 8, caractérisé en ce que le pont ( 36 ) de la superstructure est muni d'un garde-corps ( 38 ).

10. Module selon la revendication 9, caractérisé en ce que le pont de séjour ( 36 ) a une plage avant ( 48 ) et une plage arrière ( 40 ) reliées entre elles par une passerelle ( 44 ) au niveau du pont.

11. Module selon la revendication 10, caractérisé en ce que la passerelle ( 44 ) et la partie du garde-corps ( 38 ) y associée sont extensibles pour s'adapter à la longueur de la caravane ( 24 ) embarquée.

12. Module selon l'une quelconque des revendications 9 à 11, caractérisé en ce que le pont de séjour ( 36 ) passe au-dessus d'un timon ( 50 ) de la caravane ( 24 ).

13. Module selon la revendication 10, caractérisé en ce que la partie avant ( 48 ) du pont ( 36 ) et le garde-corps ( 38 ) y associé sont amovibles pour permettre le chargement et le déchargement de la caravane ( 24 ).

14. Module selon la revendication 9, caractérisé par un portillon d'accès ( 54 ) à bord arrangé dans le garde-corps ( 38 ).

15. Module selon la revendication 1, caractérisé en ce que toutes les surfaces de circulation du pont ( 36 ) sont conçues antidérapantes.

16. Module selon la revendication 1, caractérisé par un caisson transversal arrière ( 42 ), solidaire de la superstructure.

17. Module selon la revendication 16, caractérisé en ce que le groupe motopropulseur est monté dans le caisson arrière ( 16 ).

18. Module selon la revendication 19, caractérisé en ce que le caisson arrière ( 42 ) a des volumes supplémentaires pouvant servir comme volumes de rangement et comme volumes pour recevoir le réservoir de carburant, les batteries, une dynamo et autres accessoires.

-9-

19. Module selon la revendication 1, caractérisé par un poste de pilotage ( 52 ) équipé de toutes les commandes et tous les instruments nécessaires à la navigation et au contrôle du moteur.

20. Module selon l'une quelconque des revendications 1 et 19, caractérisé par au moins un gouvernail ( 60 ) avant commandé à partir du poste de pilotage (52).

21. Module selon la revendication 1, caractérisé en ce que les flotteurs sont constitués par une barge à fond plat.

22. Module selon la revendication 21, caractérisé en ce que le fond de la barge est constitué de caissons avec des compartiments étanches.

23. Module selon les revendications 21 ou 22, caractérisé en ce que les rails sont fixés sur le fond plat de la barge.

Fig. 1

Fig. 2

Fig. 4

24

8
30
32
56
42
12
14
10

Fig. 3

24
52
64
64'
60
8
32
30
12
62
18
22
14
20
16
62'
10

Fig. 5

28
50
38'
28
8
26
60
48
52
26
58
46
12
36
10
44
24
32
30
38
54
26
40
42
26
28
26
28

2/2

~~14~30

Numéro de la demande

**Office européen des brevets**

## RAPPORT DE RECHERCHE EUROPEENNE

EP 80 10 0122

| Catégorie | DOCUMENTS CONSIDERES COMME PERTINENTS | Revendication concernée | CLASSEMENT DE LA DEMANDE (Int. Cl. 3) |
|---|---|---|---|
| | Citation du document avec indication, en cas de besoin, des parties pertinentes | | |
| X | US - A - 3 807 338 (SHADER) <br> * En entier * <br><br> -- | 1,5,9, 10,12- 14,16 18-20 | B 63 B 35/72 <br> 35/54 <br> 1/12 |
| X | CA - A - 870 916 (McLEAN) <br> * Pages 4,5,6; figures 1-4 * <br><br> -- | 1,3,4 | |
| X | US - A - 3 731 644 (BRADT) <br> * En entier * <br><br> -- | 1,2,8, 9,10, 13,17- 20 | DOMAINES TECHNIQUES RECHERCHES (Int. Cl. 3) |
| X | US - A - 2 898 877 (KING) <br> * En entier * <br><br> -- | 1,21- 23 | B 63 B |
| X | FR - A - 2 031 701 (BODINER) <br> * Page 3, ligne 25 à page 5, ligne 23; figures 1-5 * <br><br> -- | 1-5, 7,9,10, 13,15, 17,18 | |
| X | FR - A - 2 087 151 (CHEVANNE) <br> * En entier * <br><br> -- | 1-10, 13,16- 19 | |
| X | FR - A - 2 097 688 (ATELIERS ET CHANTIERS DE BRETAGNE) <br> * En entier * <br><br> -- | 1,9,10 12-14, 19-23 | CATEGORIE DES DOCUMENTS CITES <br> X: particulièrement pertinent <br> A: arrière-plan technologique <br> O: divulgation non-écrite <br> P: document intercalaire <br> T: théorie ou principe à la base de l'invention |
| X | FR - A - 2 085 465 (LOUET) <br> * En entier * <br><br> ---- | 1, 6, 21,22 | E: demande faisant interférence <br> D: document cité dans la demande <br> L: document cité pour d'autres raisons |
| | | | &: membre de la même famille, document correspondant |

Le présent rapport de recherche a été établi pour toutes les revendications

| Lieu de la recherche | Date d'achèvement de la recherche | Examinateur |
|---|---|---|
| La Haye | 28-04-1980 | DE SCHEPPER |

OEB Form 1503.1 06.78